# EUROPEAN PATENT APPLICATION

(11) **EP 1 753 205 A1**
(43) Date of publication of application: **14.02.2007**
(21) Application number: 06016345.8
(22) Date of filing: 04.08.2006
(51) Int. Cl.: H04L 29/08

(54) **Method and system for configuration of a home gateway**

(30) Priority: 09.08.2005 KR 20050072905
(71) Applicant: Samsung Electronics Co., Ltd., Suwon-si, Gyeonggi-Do (KR)
(72) Inventor: Kim, Hee-Gu 801-1903, Byeokjeokgol 8-danji, Suwon-si Gyeonggi-do (KR)
(74) Representative: Lang, Johannes

(57) **Abstract**

An environment setup apparatus and method for a home gateway system for a home gateway that provides triple play service. Even though a user does not manually operate the home gateway, the home gateway automatically downloads and installs an application program from a file server on a network to provide environment setup information and service. This can facilitate home gateway's environment setup and ensure systematic maintenance of the home gateway as well..

## Description

### BACKGROUND OF THE INVENTION

### Field of the Invention

The present invention relates to an environment setup apparatus and method for a home gateway system. More particularly, the invention relates to an apparatus and method for automatically executing environment setup for a home gateway that is installed in a subscriber's house to provide for Triple Play Service (TPS).

### Description of the Related Art

TPS to be provided in a home or residential gateway of the invention will be described first. The use of Personal Computers (PC) on the Internet has resulted in interactive services such as online game and shopping to users. Recently, some multimedia providers such as BBCi (BBC's interactive television services) are combining Internet technologies to a TV system. In application of such technologies, traffic exchanged between a provider and a subscriber can be classified into three categories, including voice, data and video. A service for providing such three types of traffic is referred to as Triple Play Service (TPS).

Versatel in Netherlands uses Digital Subscriber Line (DSL) in order to provide TPS. DSL is a technique for providing high-speed information transmission to a home or a small sized company via typically a copper telephone line. DSL can be divided into several networks such as Asymmetric Digital Subscriber Line (ADSL), High bit-rate Digital Subscriber Line (HDSL) and Rate-adaptive Asymmetric Digital Subscriber Line (RADSL). By using high-speed information transmission techniques such as DSL, communication service providers can provide voice, data and video.

In order to use such a high-speed network, a home gateway or a high-speed modem is required. Two techniques are generally used at present to install a home gateway on DSL. In the first technique, an engineer visits subscribers on home-by-home basis to establish a home gateway environment and to install necessary application programs according to the service type to be provided. In the second technique, common environment construction and setup information of a home gateway are assembled into files so that subscribers can download these by themselves. However, even in the second technique, an engineer still has to visit the homes of subscribers in order to set up the home gateway environment.

Because the engineer has to come out, the following problems can occur. First, a substantial expense is incurred by having the engineer visit the home to install the home gateway. Second, home gateway installation is time-consuming. Third, the account and password of an administrator can be disclosed when the engineer installs the home gateway, causing a security problem. Fourth, once a home gateway is installed, it is difficult to maintain and manage. Therefore, what is needed is a technique and a system for providing the same where it is no longer necessary for an engineer to visit the subscriber's home when the subscriber wants these services.

### SUMMARY OF THE INVENTION

It is therefore an object of the present invention to provide an improved method of setting up triple play services in a home gateway.

It is also an object of the present invention to provide an automatic method of installing triple play services in a home gateway so that a special service person does not need to be called out to the subscriber's home.

It is further an object of the present invention to provide a network allowing for the automatic installation of triple play services to a subscriber through a home gateway.

It is still an object of the present invention to provide an automatic environment setup apparatus and method for a home gateway system, by which when environment setup information about a subscriber's home gateway and necessary application programs are stored in a file server on a network, the home gateway can access the file server to download the environment setup information and application programs in response to a subscriber powering on the home gateway, and if necessary, update its environment setup while installing the application program.

These and other objects can be achieved by an environment setup method in a home gateway, including providing a network comprising at least one home gateway and a file server connected to each of the at least one home gateway via the Internet, powering on the at least one home gateway, requesting transmission of an environment setup file by one of the at least one home gateway, the environment setup file comprising subscriber environment setup information for triple play service, transmitting, from the file server to the one of the at least one home gateway, the environment setup file, storing the environment setup file within a memory within the one of the at least one home gateway, installing the environment setup file within the one of said at least one home gateway and providing said triple play services to said subscriber via the one of the at least one home gateway.

The triple play service can include one or more of Voice over Internet Protocol (VoIP) service, Video on Demand (VoD) service and Internet protocol television (IP TV) service. The subscriber environment setup information for triple play service can include one or more of Virtual Path Identifier (VPI) information, Virtual Channel Identifier (VCI) information, ATM Adaptation Layer (AAL) format information, media data codec information, data transmission rate information and data transmission protocol information.

The method can further include receiving, at the one of the at least one home gateway, address information of the file server from a Dynamic Host Configuration Protocol (DHCP) server, wherein, during the requesting transmission of an environment setup file by the one of the at least one home gateway, a request message according to the address information of the file server is sent by the one of the at least one home gateway to the file server. The subscriber environment setup information can include version information and path information of an application program stored in the file server.

The method can also include comparing version information of an application program stored in the file server with that of an application program installed in the one of the at least one home gateway and receiving the application program stored in the file server according to the path information based upon a result of the comparing. The subscriber environment setup information can include version information thereof.

The method can further include comparing, at the one of the at least one home gateway, the version information of the subscriber environment setup information with environment setup version information of the home gateway and updating the environment setup information of the one of the at least one home gateway based on said comparing.

According to another aspect of the present invention, a home gateway system can include a central processor adapted to receive subscriber environment setup information from a file server on a network, the subscriber environment setup information comprising environment setup information of triple play service afforded to a subscriber and a memory adapted to store said environment setup information. The triple play service can include one or more of VolP service, VoD service and IP TV service. The environment setup information can include one or more of Virtual Path Identifier (VPI) information, Virtual Channel Identifier (VCI) information, ATM Adaptation Layer (AAL) format information, media data codec information, data transmission rate information and data transmission protocol information.

The central processor can be further adapted to receive address information of the file server from a Dynamic Host Configuration Protocol (DHCP) server and transmit a subscriber environment setup information request message to the file server based on said received address information. The subscriber environment setup information can also include version information and path information of an application program stored in the file server.

The central processor can be further adapted to determine whether or not an application program installation is necessary based upon the version information of the application program, receive, according to the result of the determination, the application program from the file server based upon the path program of the application program and install the received application program upon said receipt. The subscriber environment setup information can further include version information. The central processor can be further adapted to compare the version information of the subscriber environment setup information with environment setup version information of the home gateway and update the environment setup information based on the comparing.

According to yet another aspect of the present invention, the present invention provides a method, including providing a network comprising at least one home gateway and a file server connected to each of the at least one home gateway via the Internet, one of the at least one home gateway having an environment setup file containing a version file installed and stored within providing triple play service to a subscriber, requesting of the file server by the one of the at least one home gateway a version file, transmitting, from the file server to the one of the at least one home gateway, the version file, determining whether the version file stored within the one of the at least one home gateway is the same as the transmitted version file and updating version file stored within the one of the at least one home gateway when said stored version of the version file is different from said transmitted version file.

The method can further include determining whether a polling time has expired and performing said requesting upon said expiry. The updating can include storing said transmitted version file within said memory within said one of at least one home gateway and installing said transmitted version file. The method can also include requesting transmission of an environment setup file by the one of the at least one home gateway, transmitting, from the file server to the one of the at least one home gateway, the environment setup file, comparing a version of an environment setup file stored within said one of the at least one home gateway with the transmitted environment setup file, storing said transmitted environment setup file based on said comparison and installing said transmitted environment setup file based on said comparison.

### BRIEF DESCRIPTION OF THE DRAWINGS

A more complete appreciation of the invention and many of the attendant advantages thereof, will be readily apparent as the same becomes better understood by reference to the following detailed description when considered in conjunction with the accompanying drawings in which like reference symbols indicate the same or similar components, wherein:
FIG. 1 is a block diagram illustrating a network including a home gateway according to the present invention;
FIG. 2 is a flowchart illustrating a process of storing environment setup information for a home gateway according to the present invention;
FIG. 3 is a flowchart illustrating a process of initial environment setup for a home gateway according to the present invention;
FIG. 4 is a flowchart illustrating a process of periodic environment update for a home gateway according to the present invention;
FIG. 5 is a flowchart illustrating a process of initial environment setup by a home gateway according to the present invention;
FIG. 6 is a flowchart illustrating a process of periodic environment setup by a home gateway according to the present invention; and
FIG. 7 is a block diagram illustrating the structure of a home gateway according to the present invention.

### DETAILED DESCRIPTION OF THE INVENTION

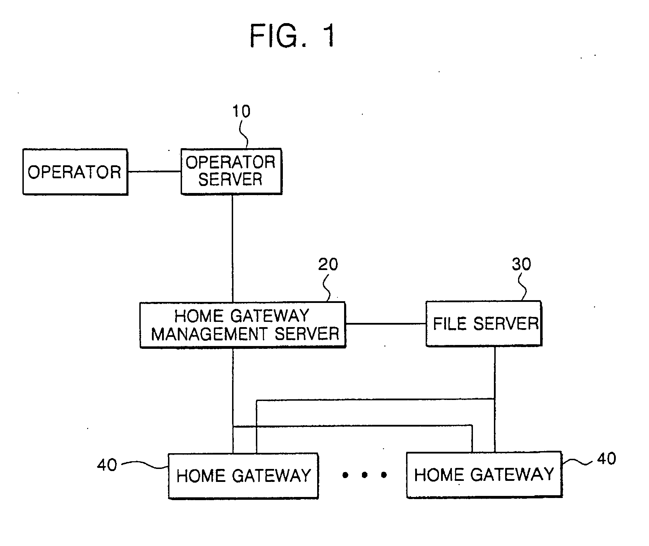

Turning now to the figures, FIG. 1 is a block diagram illustrating a network including a home gateway according to the invention. As shown in FIG. 1, a network according to the present invention includes an operator server 10, a home gateway management server 20, a file server 30 and at least one home gateway 40.

The operator server 10 stores information on subscribers who have applied for various Internet services. The operator server 10 transmits information necessary for TPS on subscribers to the home gateway management server 20 or a Dynamic Host Configuration Protocol (DHCP) server.

The home gateway management server 20 generates environment setup files containing environment setup information on a home gateway 40 of each subscriber based upon information received from the operator server 10, and generates a version file containing version information of the environment setup file. When files are generated as above, the home gateway management server 20 transmits the files to the file server 30. Of course, the home gateway management server 20 also has a function of controlling the status of the home gateway 40. The file server 30 stores environment setup files and version files pertaining to subscribers, and transmits such files to the home gateway 40 in response to a request therefrom.

The home gateway 40 generally provides Internet-based services to a subscriber. The home gateway 40 of the present invention searches for and downloads a home gateway environment setup file pertaining to the subscriber from the file server 30. The home gateway 40 by itself executes environment establishment and setup by using the environment setup file.

Tables 1 through 9 below explain information contained in an environment setup file of the present invention. The home gateway 40 receives an environment setup file containing information as reported in the following Tables 1 to 9 from the file server 30 in order to execute environment setup. Below are only those tables containing important information will be described.

**Table 1**

| Simple Network Management Protocol (SNMP) information contained in environment setup file | | |
|---|---|---|
| Name | Allowed Value | Default Value |
| readCommunity | string(<=15 chars) | public |
| writeCommunity | string(<=15 chars) | public |
| trapIP | ddd.ddd.ddd.ddd | |
| trapPort | 0 ~ 65535 | |
| snmpPort | 0 ~ 65535 | |
| trapCategory | string(=16 chars) | All 1 s |

Table 1 explains information corresponding to SNMP group. SNMP group is a short form of Simple Network Management Protocol, made as a network management standard.

TrapIP is the address of a server that will transmit a trap message as a service request message in response to a specific event occurring at the home gateway. According to the present invention, in a specific event that power is supplied to the home gateway, the home gateway generates a trap message. In this case, based upon TrapIP information, the home gateway transmits the trap message as an environment file request message to the file server connected to a network.

**Table 2**

| Provision information in environment setup file | | |
|---|---|---|
| Name | Allowed Value | Default Value |
| ConfVersion | 1 ~ 1000 | |
| VersionFilename | string(<=128 chars) | |
| ImageFilename | string(<=80 chars) | |
| ftpServer | ddd.ddd.ddd.ddd | |
| ftpUserName | string(<=40 chars) | |
| ftpPassword | string(<=40 chars) | |
| pollTime | 00:00 ∼ 23:59 | |
| pollPeriod | 24, 48, 72 | 24 |
| pollRange | 0 ~ 1439 | 30 |

Table 2 explains information contained in Provision group of an environment setup file. Provision group contains the version of the environment setup file and the address of a file server in association with the present invention.

ConfVersion has values ranging from 1 to 1000, and increases by 1 whenever the environment setup is changed. If ConfVersion exceeds 1000, the value starts with 1 again. VersionFileName functions to store the value of a character string having 128 characters or less. This contains path information of a version file that will be referred to by the home gateway. ImageFileName contains path information of an application program image that will be downloaded by the home gateway from the file server. In this case, the ImageFileName can contain version information of the application program. FtpServer contains address information of the file server that is a source from which the home gateway downloads an environment setup file or an application program. PollTime, PollPeriod and PollRange contain environment setup update information of the gateway and update period information of an application program.

**Table 3**

| AccCtrlEntry information in environment setup file | | | |
|---|---|---|---|
| Name | Allowed Value | Default Value | Description |
| accAddr# | ddd.ddd.ddd.ddd | | Home gateway accessible IP |
| sptUsrName# | string(<=16 char) | | Home gateway accessible account |
| sptUsrPassword # | string(<=16 char) | | Home gateway accessible password |

AccCtriEntry group in Table 3 contains the information of terminals accessible to the home gateway.

**Table 4**

| AtmCfgVcc information in environment setup file | | |
|---|---|---|
| Name | Allowed Value | Default Value |
| serviceVoice | true / false | |
| serviceInternet | true / false | |
| serviceVideo | true / false | |
| serviceMulticast | true / false | |

Table 4 shows information contained in Service group of an environment setup file. A service group contains service item information that a subscriber can use. The service group contains ServiceVoice, ServiceInternet, ServiceVideo and ServiceMulticast variables that can be true (T) or false (F). For example, where a user uses only telephone service and Internet service, only ServiceVoice and ServiceInternet variables are true but the other variables are false. Of course, if more services other than telephone, Internet, video and multicast services exist, Service group will contain more variables.

**Table 5**

| Route information in environment setup file | | | |
|---|---|---|---|
| Name | Allowed Value | Default Value | Description |
| vccld#_vpi | 0 ~ 255 | | VPI/VCI is used upon detection of next transmitter during passage of ATM switch |
| vccld#_vci | 32~65535 | | |
| vccld#_aalType | aal5/aal2/aalOpkt/all Ocel1/aaltransparent | | ATM Adaptation Layer |
| vccld#_encap | IIc/vcMuxRouted/ vcMuxBr8023/ vcMuxBr8025/ vcMuxBr8026/ vcMuxLanEmu8023 | | Data Encapsulation Type |
| vccld#_cat | UBR/UBRwPC/CBR/ NRT_VBR/RT_VBR | | Cell Type |
| vccld#_PCR | 1 - Max ADSL | | Peak Cell Rate |
| vccld#_SCR | 1 - (vcclD#PCR-1) | | Sustainable Cell Rate |
| vccld#_MBS | 1 - 1000000(cells) | | Maximum Burst Size |
| vccld#_protocol | PPPoE/PPPoA/MER /BRIDGE/lPoA | | Protocol Type |
| vccld#_firewall | enable/disable | | Firewall enable/disable |
| vccld#_nat | enable/disable | | Network Address Translator (NAT) function enable/disable |
| vccld#_igmp | enable/disable | | Internet Group Management Protocol (IGMP) function enable/disable |
| vccld#_username | string(<=40 chars) | | Requested at PPPoE/PPPoA |
| vccld#_password | string(<=24 chars) | | Requested at PPPoE/PPPoA |
| vccld#_auth | auto/pap/chap/msch ap | | Authentication Protocol |
| vccld#_dhcpc | enable/disable | | DHCP function enable/disable |
| vccld#_wanaddress | ddd.ddd.ddd.ddd | | Wide Area Network (WAN) IP Address |
| vccld#_wanMask | ddd.ddd.ddd.ddd | | WAN IP Subnet Mask |
| vccld#_wanGateway | ddd.ddd.ddd.ddd | | WAN Gateway IP Address |
| vccld#_rip | enable/disable | | Routing Information Protocol (RIP) function enable/disable |

Table 5 shows information contained in AtmCfgVcc group of an environment setup file. AtmCfgVcc is a group storing environment setup information of a service that is used by a subscriber. This group contains information such as protocol and encoding scheme in case of transmitting media data.

**Table 6**

| Route information in environment setup file | | | |
|---|---|---|---|
| Name | Allowed Value | Default Value | Description |
| sroute#_addr | ddd.ddd.ddd.ddd | | Destination IP Address of Static Route Information |
| sroute#_mask | ddd.ddd.ddd.ddd | | Subnet Mask of Static Route Information |
| sroute#_intf | index of AtmCfgVcc | | index of Permanent Virtual Circuit (PVC) |

**Table 7**

| MGCP information in environment setup file | | | |
|---|---|---|---|
| Name | Allowed Value | Default Value | Description |
| mgcpCaAddr | ddd.ddd.ddd.ddd | | Call Agent IP Address |
| mgcpCaPort | 1024 ~ 65535 | | Call Agent User Datagram Protocol (UDP) port number |
| mgcpCountry | DEU / NLD / BEL | | Country Code |
| mgcpNumEndp | 1 ~ 2 | | Number of Media Gateway Control Protocol (MGCP) End Point |
| mgcpEpName | string(<=20 chars) | | End Point Name |
| mgcpSch | 0 ~ 999999999 | | Starting Channel |
| mgcpGwName | string(<=20 chars) | | MGCP Gateway IP Address |
| mgcpPrefCode c | auto/g711u/g711a/ g729/g723/g726 | | Voice Coder/Decoder (CODEC) |

**Table 8**

| IGMP information in environment setup file | | | |
|---|---|---|---|
| Name | Allowed Value | Default Value | Description |
| igmpMaxMChanne I | 1 ~ | | The number of multicast channels |
| igmpQueryInterval | 1 ~ | 125 | IGMP last number query interval |
| igmpQueryCount | 1 ~ | | IGMP last number query count |

**Table 9**

| Set Top Box (STB) information in environment setup file | | | |
|---|---|---|---|
| Name | Allowed Value | Default Value | Description |
| stbCCIAddr | string(<=80 chars) | | Common Client Interface (CCI) Server IP address or Uniform Resource Locator (URL) for VOD and IP-TV service |
| numSTB | 0 ~ 4 | | Enabled STB ports |
| stbModel# | string(<=80 chars) | | STB Identifier |

In addition, Route in Table 6 contains static route information, MGCP in Table 7 contains Media Gateway Control Protocol information. Furthermore, IGMP in Table 8 contains Internet Group Management Protocol information, and STB in Table 9 contains Set-top box information.

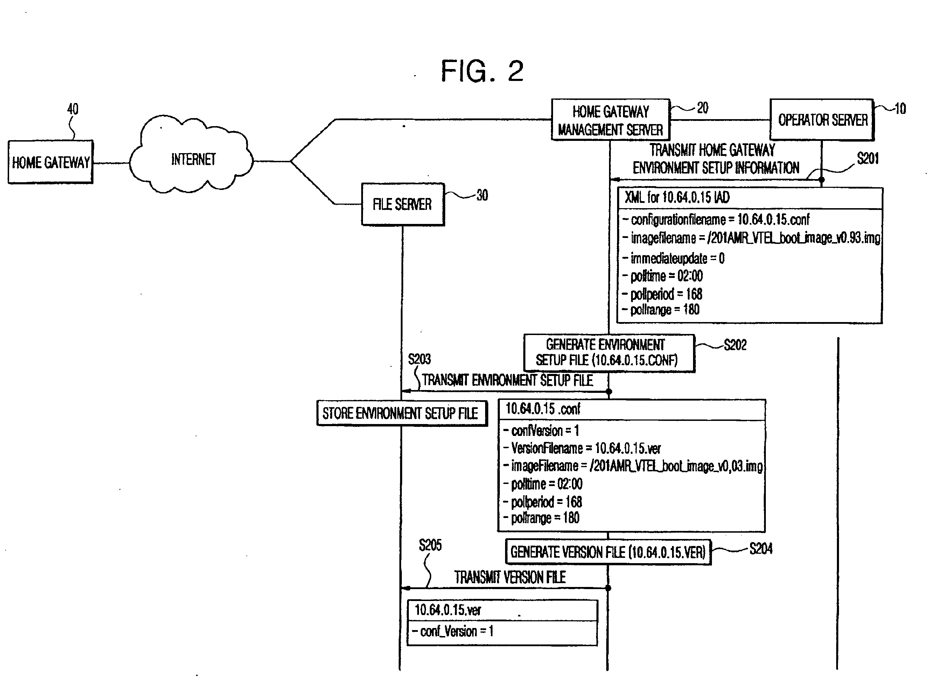

Turning now to FIG. 2, FIG. 2 is a flowchart illustrating a process of storing environment setup information for a home gateway according to the present invention. As illustrated in FIG. 2, the operator server 10 transmits subscriber information of the home gateway 40 to the home gateway management server 20 in S201. The subscriber information of the home gateway 40 can be transmitted to the home gateway management server 20, written in eXtensible Markup (XML) language.

Upon receiving the subscriber information of the home gateway from the operator server 10, the home gateway management server 20 generates an environment setup file in S202. Since IP address of the home gateway 40 of the subscriber is 10.64.0.15 in the above example, the home gateway management server 20 creates an environment setup file of 10.64.0.15.conf. As shown in FIG. 2, the environment setup file contains various information such as version information (ConfVersion), version file name (VersionFilename), application program image file name (ImageFilename), polling time (PoliTime). In S203, the home gateway management server 20 transmits the environment setup file 10.64.0.15.conf to the file server 30, which in turn stores the environment setup file.

The operator server 10 generates a version file in order to determine whether or not the environment setup file needs to be updated. To do this, the operator server 10 generates a version file 10.64.0.15.ver by using the address of the home gateway 40. This version file contains version information of the environment setup file that is transmitted in S203 above. As shown in FIG. 2, information Conf_Version = 1 indicates the version of the environment setup file. In the above example, it is apparent that the environment setup file is a first version. As with the environment setup file, the operator server 10 transmits the version file to the file server 30, which in turn stores the version file in S205.

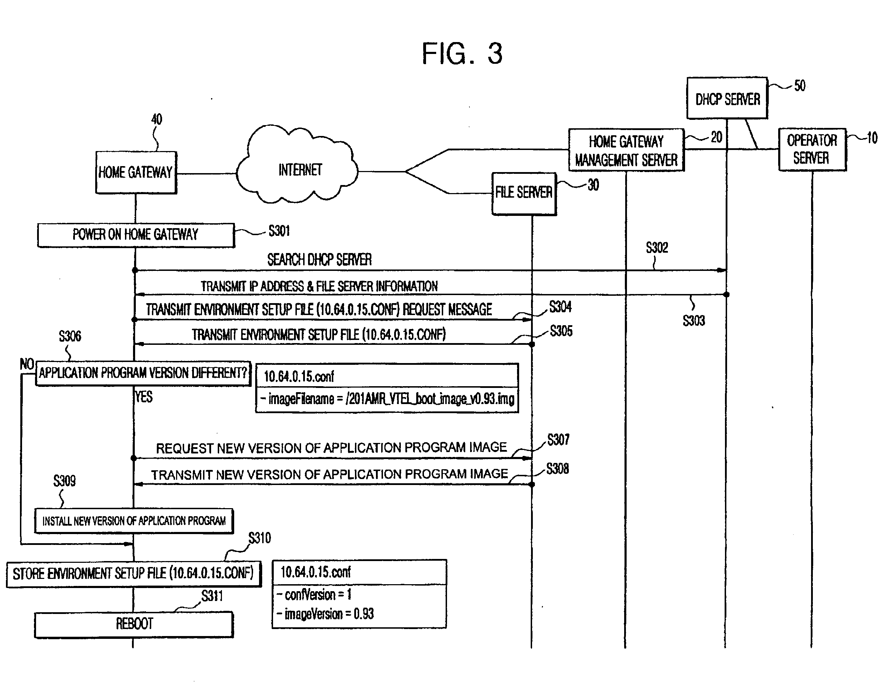

Turning now to FIG. 3, FIG. 3 is a flowchart illustrating a process of initial environment setup for a home gateway according to the present invention. In FIG. 3. When a user powers on the home gateway 40 in S301, the home gateway 40 searches a DHCP server 50 in S302, and the DHCP server 50 transmits information such as IP address, basic gateway, dynamic network services (DNS), file server name and environment setup name to the home gateway 40 in S303 so that the home gateway 40 can use such information.

Then, the home gateway 40 transmits an environment setup file request message to the file server 30 in step 304 according to the address of the file server 30 received from the DHCP server 50 in S303. Since the home gateway's address is 10.64.0.15, the environment setup file request message transmitted to the file server 30 requests the file server 30 to transmit 10.64.0.15.conf file to the home gateway 40. The file server 30 transmits an environment setup file or 10.64.1.15.conf file to the home gateway 40 in S305.

The home gateway 40 compares application program image version contained in the environment setup file received from the file server 30 with that of an application program previously installed in the home gateway 40 in S306. If the application program image version contained in the environment setup file is different from that of the application program previously installed in the home gateway 40, the home gateway 40 requests the file server 30 to transmit a new image file in S307. The file server 30, upon receiving the transmission request, transmits a new image to the home gateway 40 in S308. Upon receipt, the home gateway 40 installs an application program by using the new image in S309.

If it is determined in S306 above that the two application programs have the same image version or the new application program is completely installed in accordance with the new image, the home gateway 40 stores the environment setup file in S310 and then reboots in S311.

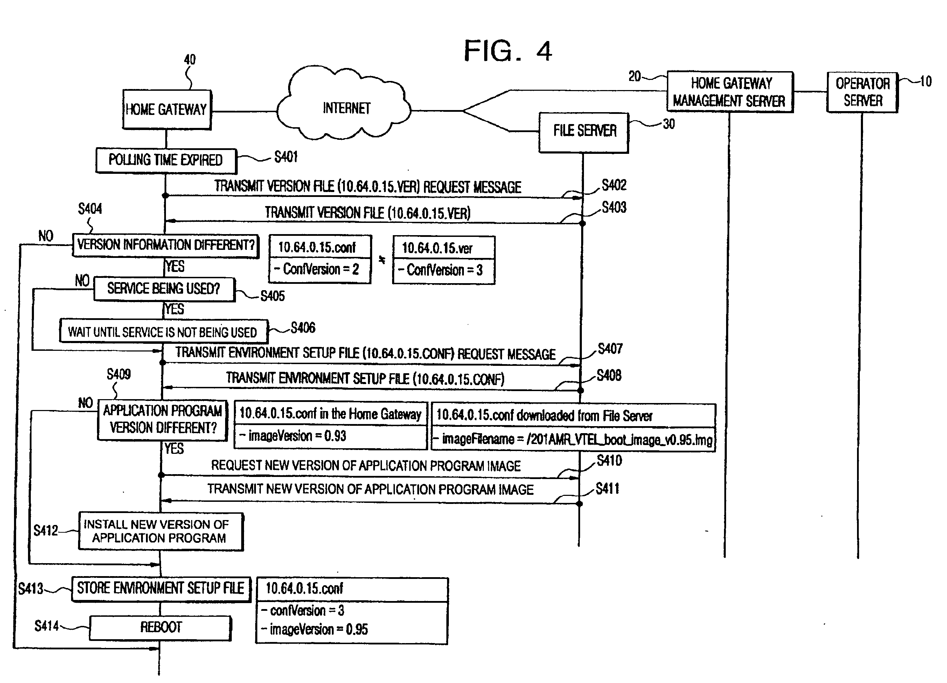

Turning now to FIG. 4, FIG. 4 is a flowchart illustrating a process of periodic environment update for a home gateway according to the present invention. When polling time is expired in S401, the home gateway 40 requests the file server 30 to transmit a version file in S402. In response to this request, the file server 30 transmits a version file such as 10.64.0.15.ver to the home gateway 40 in S403. In S404, the home gateway 40 compares the version file received from the file server 30 in S403 above with a previously stored version file in order to determine whether or not it is necessary to update environment setup of the home gateway 40.

If environment update is necessary as a result of determination above, the home gateway 40 examines whether or not services such as IP TV, VoD and VoIP are currently being used in S405. The home gateway 40 in S406 waits until these services are not currently being used, and then in S407, requests the file server 30 to transmit an updated environment setup file. Then, the file server 30 transmits the updated file server to the home gateway 40 in S408.

The home gateway 40 analyzes the newly received environment setup file with the previously stored one to determine the necessity of updating the application program in S409. In this example, the home gateway 40 determines that application program update is necessary since the image version of the previously stored environment setup file is 0.93 and the image version of the newly received one is 0.95.

As a result, the home gateway 40 transmits another message to the file server 30, requesting transmission of an application program image from the file server 30 in S410. In response to this request, the file server 30 transmits a new version of application program image to the home gateway 40 in S411. Then, the home gateway 40 updates the application program by using the received application program image in S412. The home gateway 40, in S413, stores the environment setup file received in S408 above, and then in S414, reboots.

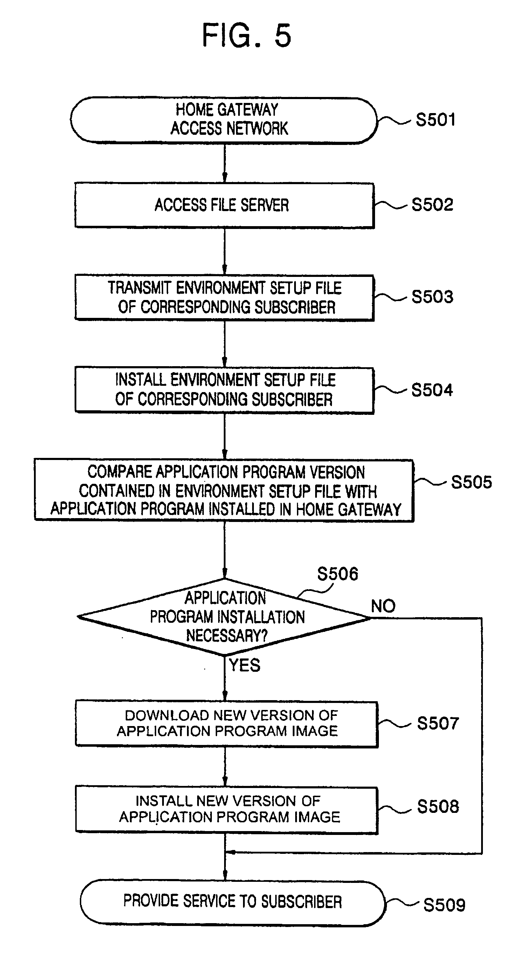

Turning now to FIG. 5, FIG. 5 is a flowchart illustrating a process of initial environment setup by a home gateway according to the present invention. The home gateway first accesses the network in S501, and then accesses the file server in S502. In S503, the home gateway downloads an environment setup file of a corresponding subscriber stored in the file server. The home gateway installs the environment setup file in S504, compares information of the newly received environment setup file with that of an existing environment setup file in S505, and determines whether or not an application program installation is necessary in S506.

If an updated application program exists, the home gateway receives an updated application program image from the file server in S507, and installs the application program by using the updated application program image in S508. When application program installation is completed, the home gateway finishes environment setup operation and affords services to the subscriber in S509.

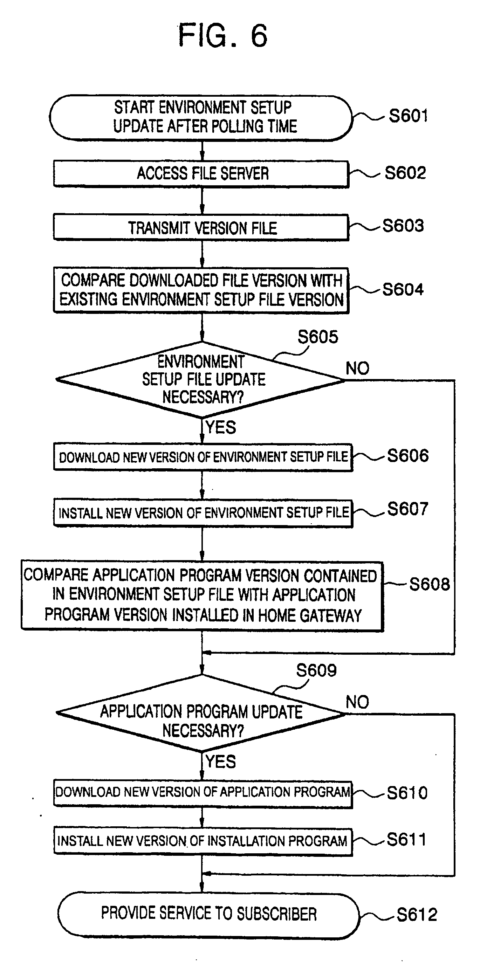

FIG. 6 is a flowchart illustrating a process of a periodic update of the environment setup by a home gateway according to the present invention. When a polling time has expired, the home gateway starts updating its own environment setup in S601. First, the home gateway accesses the file server in S602, and downloads a version file in S603. Then, the home gateway compares downloaded version of the file information with existing environment setup file information in S604 in order to determine the necessity of updating the environment setup in S605.

If information contained in the downloaded version file is different from existing environment setup information, the home gateway downloads a new version of an environment setup file from the file server in S606, and executes environment setup update by installing a new version of the environment setup file in S607. Then, the home gateway compares application program information contained in the received environment setup file with an application program version installed in the home gateway in S608 in order to determine the necessity of updating the application program in S609. If it is determined that updating the application program is necessary, the home gateway downloads the new version of the application program image from the file server in S610, and installs application program by using downloaded application program image in S611. Upon completing environment setup and application program update, the home gateway provides services to the subscriber in S612.

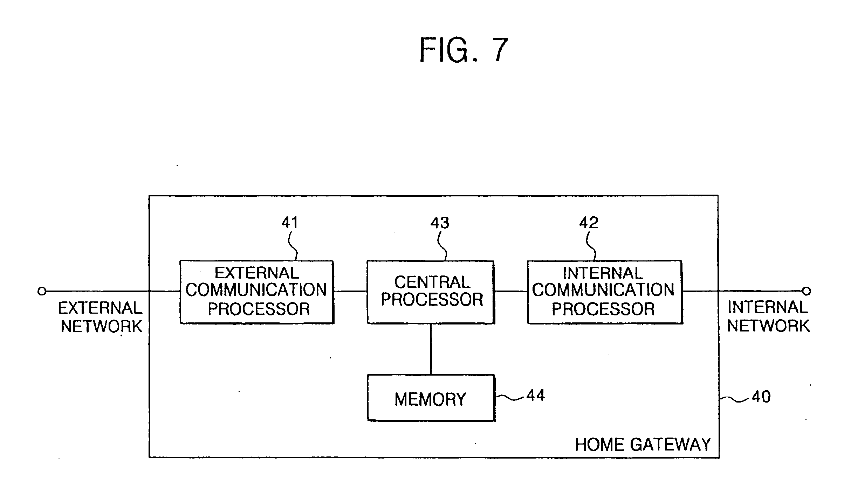

Turning now to FIG. 7, FIG. 7 is a block diagram illustrating the structure of a home gateway according to the present invention. As shown in FIG. 7, a home gateway 40 includes an external communication processor 41, an internal communication processor 42, a central communication processor 43 and a memory 44. The external communication processor 41 is a component for conducting communication with an external network such as Internet. The internal communication processor 42 is a component for conducting communication with, for example, a computer and a VolP terminal of a subscriber. The memory 44 stores environment setup information of the home gateway 40 and application programs necessary for operation thereof and so on.

The central processor 43 conducts general control over the home gateway 40 of the present invention. In detail, the central processor 43 controls the external communication processor 41 to download an environment setup file and an application program from the file server 30, which are then stored in the memory 44. The central processor 43 sets up a home gateway environment by using the downloaded environment setup file and application program. The central processor 43 also examines polling time or period in order to determine when to check for updates to the environment setup of the home gateway 40. Upon completion of initial environment setup or its update, the central processor 43 receives data from the external communication processor 41 and relays the data to a subscriber terminal via the internal communication processor 42.

As described herein before, the automatic environment setup apparatus and method for a home gateway system of the present invention are designed enable, when environment setup information about subscriber's home gateway and necessary application program are stored in a file server on a network, the home gateway to access the file server and download the environment setup information and application program in response to subscriber's powering on the home gateway, and if necessary, update its environment setup as well as install the application program. This enables simplified home gateway environment setup and updating without requiring an installation engineer to visit, thus saving money. Further, security problems associated with manual installation of the home gateway can also be overcome to a considerable degree.

Although the present invention has been shown and described with reference to the accompanying drawings, it is not to be understood that the present invention is limited thereto. The home gateway as described above is not limited to Internet service but can provide triple play service (e.g., IP-TV, VoD and VoIP service) afforded by Versatel in Netherlands. Furthermore, it is apparent that the present invention can be applied to a home gateway that provides online service based upon other Internet or network. Moreover, the present invention can be used in association with environment setup of other network units such as high-speed modem and LAN card other than the home gateway.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. An environment setup method in a home gateway, comprising:
providing a network comprising at least one home gateway and a file server connected to each of the at least one home gateway via the Internet;
requesting transmission of an environment setup file by one of the at least one home gateway, the environment setup file comprising subscriber environment setup information for triple play service;
transmitting, from the file server to the one of the at least one home gateway, the environment setup file;
installing the environment setup file within the one of said at least one home gateway; and

2. The environment setup method of claim 1, the triple play service comprising at least one service selected from the group consisting of Voice over Internet Protocol (VoIP) service, Video on Demand (VoD) service and Internet protocol television (IP TV) service.

3. The environment setup method of claim 1, wherein the subscriber environment setup information for triple play service comprises at least one selected from the group consisting of Virtual Path Identifier (VPI) information, Virtual Channel Identifier (VCI) information, ATM Adaptation Layer (AAL) format information, media data codec information, data transmission rate information and data transmission protocol information.

4. The environment setup method of claim 1, further comprising receiving, at the one of the at least one home gateway, address information of the file server from a Dynamic Host Configuration Protocol (DHCP) server, wherein, during the requesting transmission of an environment setup file by the one of the at least one home gateway, a request message according to the address information of the file server is sent by the one of the at least one home gateway to the file server.

5. The environment setup method of claim 1, wherein the subscriber environment setup information comprises version information and path information of an application program stored in the file server.

6. The environment setup method of claim 5, further comprising:
comparing version information of an application program stored in the file server with that of an application program installed in the one of the at least one home gateway; and
receiving the application program stored in the file server according to the path information based upon a result of the comparing.

7. The environment setup method of claim 1, wherein the subscriber environment setup information comprises version information thereof.

8. The environment setup method of claim 7, further comprising:
comparing, at the one of the at least one home gateway, the version information of the subscriber environment setup information with environment setup version information of the home gateway; and
updating the environment setup information of the one of the at least one home gateway based on said comparing.

9. A home gateway system, comprising:
a central processor adapted to receive subscriber environment setup information from a file server on a network, the subscriber environment setup information comprising environment setup information of triple play service afforded to a subscriber; and
a memory adapted to store said environment setup information.

10. The home gateway system of claim 9, wherein the triple play service comprises at least one selected from the group consisting of VolP service, VoD service and IP TV service.

11. The home gateway system of claim 9, wherein the environment setup information comprises at least one selected from the group consisting of Virtual Path Identifier (VPI) information, Virtual Channel Identifier (VCI) information, ATM Adaptation Layer (AAL) format information, media data codec information, data transmission rate information and data transmission protocol information.

12. The home gateway system of claim 9, the central processor being further adapted to:
receive address information of the file server from a Dynamic Host Configuration Protocol (DHCP) server; and
transmit a subscriber environment setup information request message to the file server based on said received address information.

13. The home gateway system of claim 9, wherein the subscriber environment setup information further comprises version information and path information of an application program stored in the file server.

14. The home gateway system of claim 13, the central processor being further adapted to:
determine whether or not an application program installation is necessary based upon the version information of the application program;
receive, according to the result of the determination, the application program from the file server based upon the path program of the application program; and
install the received application program upon said receipt.

15. The home gateway system of claim 9, wherein the subscriber environment setup information further comprises version information.

16. The home gateway system of claim 15, the central processor being further adapted to:
compare the version information of the subscriber environment setup information with environment setup version information of the home gateway; and
update the environment setup information based on the comparing.

17. An environment setup method, comprising:
providing a network comprising at least one home gateway and a file server connected to each of the at least one home gateway via the Internet, one of the at least one home gateway having an environment setup file containing a version file installed and stored within providing triple play service to a subscriber;
requesting of the file server by the one of the at least one home gateway a version file;
transmitting, from the file server to the one of the at least one home gateway, the version file;
determining whether the version file stored within the one of the at least one home gateway is the same as the transmitted version file; and
updating version file stored within the one of the at least one home gateway when said stored version of the version file is different from said transmitted version file.

18. The environment setup method of claim 17, further comprising:
determining whether a polling time has expired; and
performing said requesting upon said expiry.

19. The environment setup method of claim 17, said updating comprising:
storing said transmitted version file within said memory within said one of at least one home gateway; and
installing said transmitted version file.

20. The environment setup method of claim 19, further comprising:
requesting transmission of an environment setup file by the one of the at least one home gateway;
transmitting, from the file server to the one of the at least one home gateway, the environment setup file;
comparing a version of an environment setup file stored within said one of the at least one home gateway with the transmitted environment setup file;
storing said transmitted environment setup file based on said comparison; and
installing said transmitted environment setup file based on said comparison.
